# EUROPÄISCHE PATENTSCHRIFT

(11) **EP 1 856 181 B1**
(45) Veröffentlichungstag und Bekanntmachung des Hinweises auf die Patenterteilung: **09.07.2008**
(21) Anmeldenummer: 06706819.7
(22) Anmeldetag: 10.02.2006
(51) Int. Cl.: C08G 65/00

(54) **VERFAHREN ZUR HERSTELLUNG VON REINEM ALPHA-PHENOXY-OMEGA-HYDROXY- POLYALKYLENGLYKOLEN**
METHOD FOR PRODUCTION OF PURE -PHENOXY- -HYDROXY- POLYALKYLENEGLYCOLS
PROCEDE DE FABRICATION D'ALPHA-PHENOXY-OMEGA-HYDROXY- POLYALKYLENE-GLYCOLS PURS

(30) Priorität: 23.02.2005 DE 102005008181
(43) Veröffentlichungstag der Anmeldung: 21.11.2007
(73) Patentinhaber: Clariant Produkte (Deutschland) GmbH, 65929 Frankfurt am Main (DE)
(72) Erfinder: PÖLLMANN, Klaus, 84489 Burghausen (DE); STRASSER, Anton, 84503 Altötting (DE)
(74) Vertreter: Mikulecky, Klaus
(86) Internationale Anmeldenummer: PCT/EP2006/001189
(87) Internationale Veröffentlichungsnummer: WO 2006/089650

(56) Entgegenhaltungen:
- EP-A- 0 437 105
- US-A- 4 453 022

## Beschreibung

Die vorliegende Erfindung betrifft ein Verfahren zur Herstellung von α-Phenoxy-Ωhydroxy-Polyalkylenglykolen, durch das diese Produkte im Wesentlichen frei von dihydroxyfunktionellen Polyalkylenglykol-Verunreinigungen herstellbar sind.

Polyalkylenglykole werden im Allgemeinen durch anionische, ringöffnende Polymerisation von Epoxiden (Ethylenoxid, Propylenoxid, Butylenoxid) mit Alkoholat- oder Phenolatanionen als Initiatoren gemäß Reaktionsgleichung (1) hergestellt (siehe Encylopedia of Polymer Science and Engineering, Wiley + Sons, Vol. 2, S.1). Als reaktive Spezies fungiert dabei ein Alkoholat- oder Phenolat-Anion:

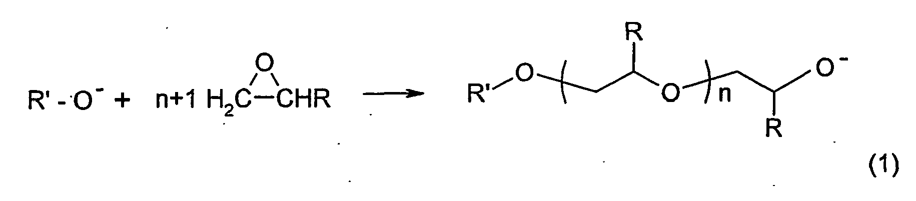

Hierin steht R' für einen Alkyl- oder Arylrest und R für H, CH₃ oder CH₃CH₂.

Das Alkoholat- oder Phenolat-Anion R' - O⁻ wird durch Umsetzung eines entsprechenden Alkohols oder Phenols mit einer Base wie Alkali- oder Erdalkalihydroxide (MOH) gemäß Gleichung 2 hergestellt.

MOH + R'OH → R'O⁻ M⁺ + H₂O (2)

Zur technischen Durchführung der Reaktion (1) ist es nicht notwendig die vollständige Menge an Alkohol oder Phenol R'OH zum entsprechenden Alkoholat- oder Phenolatanion umzusetzen. Vielmehr sind katalytische Mengen des Anions ausreichend um gemäß Reaktion (1) eine vollständige Umsetzung des Epoxids mit dem Alkohol/Phenol R'OH zu gewährleisten.

Bei der Bildung des Alkoholat-/Phenolatanions nach Gleichung (2) entsteht als Nebenprodukt Wasser. Durch die Reaktion dieses Wassers mit Alkylenoxiden bilden sich in einer Nebenreaktion nach Gleichung 3 α-Ω-di-hydroxy-Polyalkylenglykole als unerwünschte Verunreinigungen, die in α-Stellung nicht die Zielgruppe R' enthalten.

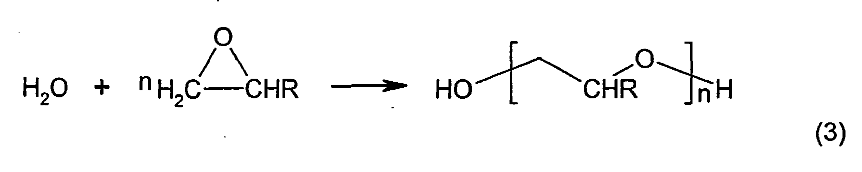

Die auf diese Weise entstehenden α-Ω-di-hydroxy-Polyalkylenglykole zeigen bei weiteren Umsetzungen, wie z.B. Veresterungen oder Veretherungen der OH-Gruppen, bedingt durch das Fehlen der R'-Gruppe in α-Stellung eine völlig andere Reaktivität und führen zu anderen Endprodukten.

Analytisch lassen sich die als Verunreinigung gebildeten α-Ω-di-hydroxy-Polyalkylenglykole einfach nachweisen, da ihre Molmasse deutlich höher als die der α-Alkoxy- bzw. α-Aryloxy-Ω-hydroxy-Polyalkylenglykole ist. Dies ist dadurch bedingt, dass bei der anionischen Polymerisation der Epoxide jede reaktive OH-Gruppe mit gleicher Reaktionsgeschwindigkeit wächst. Der Aufbau der Molmasse erfolgt deshalb für α-Ω-di-hydroxy-Polyalkylenglykole aufgrund der 2 reaktiven OH-Endgruppen doppelt so schnell wie bei den α-Alkoxy- bzw. α-Phenoxy-Ωhydroxy-Polyalkylenglykolen, die nur eine reaktive Endgruppe aufweisen. Demzufolge lassen sich Verunreinigungen von α-Ω-di-hydroxy-Polyalkylenglykolen in α-Alkoxy- und α-Phenoxy-Ω-hydroxy-Polyalkylenglykole mittels GPC-Analyse anhand der Flächenverhältnisse der Peaks der hochmolekularen Verunreinigung und der Peaks der α-Alkoxy-Ω-hydroxy-Polyalkylenglykole bestimmen. In Analysen von kommerziell verfügbaren α-Methoxy-Ω-hydroxy-Polyalkylenglykolen mittels GPC (Selisko, Delgado, Fisher in Journal of Chromatography 641, 1993, 71-79) wurden bis zu 22,9 % α-Ω-dihydroxy-Polyalkylenglykol mit Molmasse 9280 in einem α-Methoxy-Ω-hydroxy-Polyalkylenglykol mit Molmasse 5970 g/mol ermittelt. Im ¹H-NMR Spektrum erkennt man die Bildung von α-Ω-di-hydroxy-Polyalkylenglykolen im Gemisch von α-Alkoxy- und α-Phenoxy-Ω-hydroxy-Polyalkylenglykole an einem deutlich von 1 : 1 abweichenden Verhältnis der Alkoxy- bzw. Phenoxy-Endgruppen zu den Ω-CH₂-OH-Endgruppen.

Eine weitere Folge der Bildung von α-Ω-di-hydroxy-Polyalkylenglykolen ist, dass die theoretisch aus dem Verhältnis des Initiatoralkohols/-phenols R'OH zur Einsatzmenge Epoxid resultierende Molmasse des α-Alkoxy- und α-Phenoxy-Ωhydroxy-Polyalkylenglykole nicht erreicht wird. Dies erschwert die gezielte Herstellung von Produkten mit bestimmten Molmassen erheblich.

Zur Herstellung von reinen α-Alkoxy- und α-Phenoxy-Ω-hydroxy-Polyalkylenglykolen ist es daher unabdingbar vor der Alkoxylierung das entstehende Alkoholat oder Phenolat auf möglichst niedrige Wassergehalte zu trocknen, um möglichst wenige Verunreinigungen an α-Ω-di-hydroxy-Polyalkylenglykolen zu erzeugen. Für schwerflüchtige Alkohole und Phenole R'-OH ist dies durch Aufheizen unter Vakuum ohne weiteres möglich. Alkoholate und Phenolate von leicht flüchtigen oder sublimierenden Alkoholen und Phenolen oder von Alkoholen und Phenolen, die Azeotrope mit Wasser bilden, sind jedoch ohne Verluste kaum durch Trocknung unter Vakuum vom anfallenden Reaktionswasser zu befreien. Dies gilt insbesondere für Phenol, das mit Wasser ein Azetrop bildet, das bei 94,5 °C siedet (Ullmanns Encyclopedia of Industrial Chemistry Vol 19. S. 300, 5. Ed. 1991). Bedingt durch die Bildung dieses Azeotrops ist die Trocknung des Phenols vor Dosierung der Epoxidkomponente entweder nicht möglich oder mit einem Verlust an Phenol aus dem Reaktionssystem verbunden. Auch die Verwendung von Alkalimetallalkoholat wie z.B. Natriummethanolat (DE-A-3 121 929) als basischer Katalysator löst das Problem nur unbefriedigend, da das Alkalimetallmethylat aufgrund des Herstellprozesses und der hohen Hygroskopizität nie vollständig frei von Alkalihydroxid ist, das wiederum gemäß Gleichung (2) Wasser bildet. Der Verlust an Phenol während des Trocknungsprozesses wirkt sich in zweifacher Weise ungünstig aus. Zum einen verliert man einen Teil des Rohstoffs und verunreinigt das abdestillierte Wasser mit toxischem Phenol. Zum anderen ist das zur Erreichung einer bestimmten Molmasse nötige Verhältnis aus Phenol-Initiator und Einsatzmenge nicht mehr definiert, was wiederum die gezielte Herstellung von Produkten mit bestimmten Molmassen erheblich erschwert.
Aus diesem Grund war es deshalb Aufgabe der vorliegende Erfindung, α-Phenoxy-Ω-hydroxy-Polyalkylenglykole mit Molmassen von 500 - 20000 g/mol herzustellen, die weitgehend frei von α-Ω-di-hydroxy-Polyalkyfenglykolen sind.

Gegenstand der Erfindung ist somit ein Verfahren zur Herstellung von Verbindungen der Formel 1 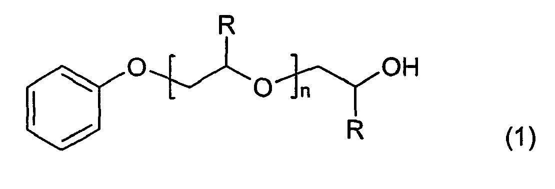 durch Umsetzung von Verbindungen der Formel 2 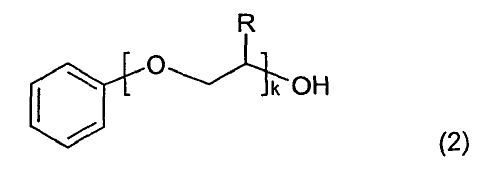 worin
- k: 1, 2 oder 3,
- R: H, CH₃ oder ein Alkylrest mit 2 bis 4 C Atomen, und
- n: eine Zahl von 10 bis 500 bedeuten,
indem man zur Verbindung der Formel 2 einen basischen Katalysator zugibt, dem so erhaltenen Gemisch das Wasser entzieht und das Gemisch mit einem Alkylenoxid der Formel 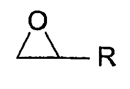 alkoxyliert.

Ein weiterer Gegenstand der Erfindung ist ein Gemisch, enthaltend neben einem größeren Anteil einer Verbindung der Formel 1 zwischen 0,01 und 5 Gew.-% einer Verbindung der Formel 3 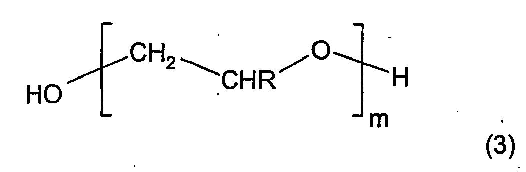 worin R die oben angegebene Bedeutung hat, und m für eine Zahl von 1 bis 1000 steht.

Wesentlich ist, dass der Phenoxyalkohol gemäß Formel 2 einen höheren Siedepunkt/Sublimationspunkt beziehungsweise niedrigeren Dampfdruck wie Wasser aufweist und kein Azeotrop mit Wasser bildet, so dass nach der Umsetzung des Alkohols mit dem Alkalihydroxid zum Alkoholatanion und vor Zugabe des Alkylenoxids eine vollständige destillative Wasserentfernung/Trocknung möglich ist ohne einen Teil des Phenoxyalkohols aus dem Reaktionssystem zu verlieren. Bei Verwendung der Phenoxyalkohole der Formel (2) ist der Wassergehalt im basischen Katalysator beziehungsweise in den aus den Phenoxyalkoholen hergestellten Phenoxyalkoholatanionen unerheblich, da ihr Siedepunkt höher wie der von Wasser ist und damit das entstehende und vorhandene Wasser problemlos ohne Verlust von Phenoxyalkohol durch destillative Vakuumtrocknung entfernt werden kann. Ebenso ist es unwichtig, ob als basischer Katalysator ein Alkalimetallalkoholat oder ein Alkalimetallhydroxid eingesetzt wird, da es in jedem Fall möglich ist vor Zugabe des Alkylenoxids Wasser destillativ aus dem Reaktionsmedium zu entfernen. Ein weiterer Vorteil des erfindungsgemäßen Verfahren ist, dass aus den genannten Gründen der Phenoxyalkohol und das Alkylenoxid gezielt im zur Erreichung einer bestimmten Molmasse, gewünschten stöchiometrischen Verhältnis eingesetzt werden können, und damit die in der Polymerisationsreaktion erreichte theoretische Molmasse des α-phenoxy-Ω-hydroxy-Polyethylenglykols ideal mit der mittels verschiedener analytischer Verfahren (GPC, ¹H-NMR, OH-Zahl-Titration) bestimmten Molmassen übereinstimmt. Phenoxyalkohole gemäß Formel 2 mit k = 1 oder 2 sind unter dem Namen 2-Phenoxyethanol, Protectol^{®} PE (BASF) oder Phenylglykol kommerziell erhältlich.

Vorzugsweise beruht das erfindungsgemäße Verfahren auf folgenden Schritten:
1. Der Phenoxyalkohol gemäß Formel 2 wird im Alkoxylierungsreaktor vorgelegt
2. Der basische Katalysator wird zugegeben
3. Das Phenoxyalkoholalkohol/Basen-Gemisch wird im Vakuum bei erhöhter Temperatur bis zu möglichst niedrigen Wassergehalten getrocknet; bevorzugt beträgt der Wasseranteil unter 500 ppm
4. Das Alkylenoxid, bevorzugt ist Ethylenoxid, das einen niedrigen Wassergehalt von vorzugsweise höchstens 50 ppm haben soll, wird in der zur Erreichung der vorgegebenen Molmasse notwendigen Menge unter Kühlung des Reaktionsgemisches zudosiert, so dass die vorgegebene Reaktionstemperatur eingehalten wird.
5. Das entstandene α-Phenoxy-Ω-hydroxy-Polyalkylenglykol wird mit einer Säure neutralisiert und seine Molmasse sowie der Gehalt an α-Ω-di-hydroxy-Polyalkylenglykolen mittels GPC Analytik und Messung der OH-Zahl bestimmt.

Folgende Beispiele verdeutlichen die Erfindung näher.

### Beispiel 1 α-Phenoxy -Ω-hydroxy-Polyethylenglykol, Molmasse 1000 g/mol

548 g 2-Phenoxyethanol (3,97 mol), das durch Vakuumdestillation sorgfältig gereinigt war, wurden in einem Druckreaktor vorgelegt. Nach Zugabe von 10,9 g Natriumhydroxid wurde bei 90°C unter Vakuum solange getrocknet bis ein Wassergehalt von 0,01 Gew.-% erreicht war. Anschließend wurden bei einer Temperatur von 130°C und einem Druck von ca. 9 bar 3452 g Ethylenoxid (78,45 mol) mit einem Wassergehalt von < 30 ppm zudosiert. Die Reaktion wurde durch Zugabe einer kleinen Menge Essigsäure abgestoppt und das Produkt mittels GPC, NMR und OH-Zahl-Titration analysiert. Die Molmassenverteilung gemäß GPC Analyse war annähernd monomodal mit dem Peakmaximum bei 1000 g/mol (entsprechend Eichung mit PEG Standards) der α-phenoxy-Ωhydroxy-Polyethylenglykol zugeordnet werden kann. Das ¹H-NMR Spektrum zeigte ein Verhältnis Phenyl : CH₂OH : OCH₂CH₂O-Gruppen von 1,0 : 1,07 : 21 entsprechend einer Molmasse von 1018 und 3,5 mol-%-PEG Diolkomponenten. Die titrierte OH-Zahl ergab 55,9 mg KOH/g entsprechend einer mittleren Molmasse von 1009 g/mol. Die theoretisch aus den Einsatzmengen Phenoxyethanol und Ethylenoxid resultierende Molmasse ist 1008 g/mol. Die Abweichung der analytisch bestimmten Molmasse (aus NMR) von der theoretischen Molmasse war lediglich 1 %.

### Beispiel 2 α-Phenoxy -Ω-hydroxy-Polyethylenglykol, Molmasse 5000 g/mol

91,51 g 2-Phenoxyethanol (0,66 mol), das durch Vakuumdestillation sorgfältig gereinigt war, wurden in einem Druckreaktor vorgelegt. Nach Zugabe von 1,2 g Natriummethylat wurde bei 90°C unter Vakuum solange getrocknet bis ein Wassergehalt von 0,01 Gew.-% erreicht war. Anschließend wurden bei einer Temperatur von 130°C und einem Druck von ca. 9 bar 33504 g Ethylenoxid (79,6 mol) mit einem Wassergehalt von < 30 ppm zudosiert. Die Reaktion wurde durch Zugabe einer kleinen Menge Essigsäure abgestoppt und das Produkt mittels GPC, NMR und OH-Zahl-Titration analysiert. Die Molmassenverteilung gemäß GPC Analyse war annähernd monomodal mit dem Peakmaximum bei 4700 g/mol (entsprechend Eichung mit PEG Standards) der α-Phenoxy-Ωhydroxy-Polyethylenglykol zugeordnet werden kann. Die PEG-Diol zuzuordnende Nebenkomponente mit Molmasse ca. 9700 g/mol hatte einen Peakflächenanteil von 3% Das ¹H-NMR Spektrum zeigte ein Verhältnis Phenyl : CH₂OH: OCH₂CH₂O-Gruppe von 1,0 : 1,09 : 110 entsprechend einer Molmasse von 4934 g/mol und nur 4,5 mol-%-PEG Diolkomponenten. Die titrierte OH-Zahl ergab 10,8 mg KOH/g entsprechend einer mittleren Molmasse von 5195 g/mol. Die theoretisch aus den Einsatzmengen Phenoxyethanol und Ethylenoxid resultierende Molmasse ist 5445 g/mol. Die Abweichung der analytisch bestimmten Molmasse (aus NMR) von der theoretischen Molmasse war 10 %.

### Beispiel 3 α-Phenoxy -Ω-hydroxy-Polyethylenglykol, Molmasse 2000 g/mol

318 g 2-Phenoxyethanol (2,3 mol), das durch Destillation sorgfältig gereinigt war, wurde in einem Druckreaktor vorgelegt. Nach Zugabe von 3,9 g Natriummethylat wurde bei 90°C unter Vakuum solange getrocknet bis ein Wassergehalt von 0,01 Gew.-% erreicht war. Anschließend wurden bei einer Temperatur von 130°C und einem Druck von ca. 9 bar 4324 g Ethylenoxid (98,3 mol) mit einem Wassergehalt von < 30 ppm zudosiert. Die Reaktion wurde durch Zugabe einer kleinen Menge Essigsäure abgestoppt und das Produkt mittels GPC, NMR und OH-Zahl Titration analysiert. Die Molmassenverteilung gemäß GPC Analyse war annähernd monomodal mit dem Peakmaximum bei 2000 g/mol (entsprechend Eichung mit PEG Standards) der α-phenoxy -Ω-hydroxy-Polyethylenglykol zugeordnet werden kann. Die PEG-Diol zuzuordnende Nebenkomponente mit Molmasse ca. 4000 g/mol hatte einen Peakflächenanteil von 0,5%. Das ¹H-NMR Spektrum zeigte ein Verhältnis Phenyl : CH₂OH : OCH₂CH₂O-Gruppen von 1,0 : 1,06 : 43 entsprechend einer Molmasse von 1968 g/mol. Die titrierte OH-Zahl ergab 27,2 mg KOH/g entsprechend einer mittleren Molmasse von 2062 g/mol. Die theoretisch aus den Einsatzmengen Phenoxyethanol und Ethylenoxid resultierende Molmasse ist 2020 g/mol. Die Abweichung der analytisch bestimmten Molmasse (aus NMR) von der theoretischen Molmasse war lediglich 3 %.

### Vergleichsbeispiel 1

241,7 g Phenol (2,57 mol) wurden als Feststoff in einem Druckreaktor vorgelegt und aufgeschmolzen. Nach Zugabe von 2,2 g Natriummethylat wurde bei 90°C unter Vakuum getrocknet. Dabei kristallisierte in den Kältefallen Phenol, das bei dieser Temperatur als azeotropes Gemisch mit dem Reaktionswasser verloren ging Anschließend wurden bei einer Temperatur von 130°C und einem Druck von ca. 9 bar 2425 g Ethylenoxid (55,1 mol) zudosiert. Die Reaktion wurde durch Zugabe einer kleinen Menge Essigsäure abgestoppt und das Produkt mittels GPC, NMR und OH-Zahl Titration analysiert. Die Molmassenverteilung gemäß GPC Analyse zeigte ein Peakmaximum bei 1400 g/mol (entsprechend Eichung mit PEG Standards) der α-phenoxy-Ω-hydroxy-Polyethylenglykol zugeordnet werden kann. Das ¹H-NMR Spektrum zeigte ein Verhältnis Phenyl : CH₂O : OCH₂CH₂O-Gruppen von 1 : 1,05 : 29 entsprechend einer Molmasse von 1370 g/mol. Die titrierte OH-Zahl ergab 43,1 mg KOH/g entsprechend einer mittleren Molmasse von 1300 g/mol.
Die theoretisch aus den Einsatzmengen Phenoxyethanol und Ethylenoxid resultierende Molmasse ist 1037 g/mol. Die Abweichung der analytisch bestimmten Molmasse (aus NMR) von der theoretischen Molmasse war in Folge des Verlusts an Phenolinitiator während der Trocknung 32 %.

### Vergleichsbeispiel 2

366,3 g Phenol (3,90 mol) wurden als Feststoff in einem Druckreaktor vorgelegt und aufgeschmolzen. Nach Zugabe von 7,3 g Natriumhydroxid wurde, um Verlust an Phenol zu verhindern, ohne zu trocknen bei einer Temperatur von 130°C und einem Druck von ca. 9 bar 3540 g Ethylenoxid (80,45 mol) zudosiert. Die Reaktion wurde durch Zugabe einer kleinen Menge Essigsäure abgestoppt und das Produkt mittels GPC, NMR und OH-Zahl Titration analysiert. Die Molmassenverteilung gemäß GPC Analyse zeigte zwei Peakmaxima bei 900 und 1800 g/mol, die im Flächenverhältnis 88 : 12 stehen. (entsprechend Eichung mit PEG Standards). Das ¹H-NMR Spektrum zeigte ein Verhältnis Phenyl : CH₂OH : OCH₂CH₂O-Gruppen von 1 : 1,24 : 22. Die titrierte OH-Zahl ergab 56,9 mg KOH/g entsprechend einer mittleren Molmasse von 986 g/mol.
Die theoretisch aus den Einsatzmengen Phenoxyethanol und Ethylenoxid resultierende Molmasse ist 1001 g/mol. Folglich stimmt zwar die aus den Einsatzmengen berechnete Molmasse mit der aus der OH-Zahl-Titration ermittelten gut überein. Die nähere Betrachtung mittel GPC und NMR Analyse zeigt jedoch, dass kein einheitliches α-Phenoxy-Ω-hydroxy-Polyethylenglykol sondern ein Gemisch aus α-Phenoxy-Ω-hydroxy-Polyethylenglykol mit einer Molmasse von 900 g/mol und etwa 12 % α-Ω-dihydroxy-Polyethylenglykol der Molmasse 1800 g/mol vorliegt. Die Bildung des α-Ω-dihydroxy-Polyethylenglykol ist eine Folge des durch die Reaktion von Natriumhydroxid und Phenol gebildeten Wassers.

## Patentansprüche

1. Verfahren zur Herstellung von Verbindungen der Formel 1 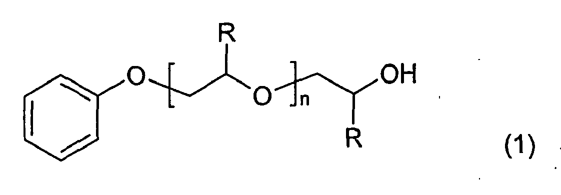 durch Umsetzung von Verbindungen der Formel 2 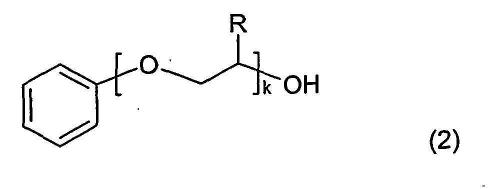 worin
k 1, 2 oder 3,
R H, CH₃ oder ein Alkylrest mit 2 bis 4 C Atomen, und
n eine Zahl von 10 bis 500 bedeuten,
indem man zur Verbindung der Formel 2 einen basischen Katalysator zugibt, dem so erhaltenen Gemisch das Wasser entzieht und das Gemisch mit einem Alkylenoxid der Formel 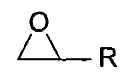 alkoxyliert.

2. Verfahren nach Anspruch 1, worin der Siedepunkt des Initiatoralkohols C₆H₅-(OCH₂-CHR)ₖ-OH größer ist als der Siedepunkt von Wasser, und der Initiatoralkohol kein Azeotrop mit Wasser bildet.

3. Verfahren nach Anspruch 1 und/oder 2, worin der Initiatoralkohol weniger als 500 ppm an di- oder polyhydroxyfunktionellen Verbindungen enthält.

4. Verfahren nach einem oder mehreren der Ansprüche 1 bis 3, worin als Initiatoralkohol C₆H₅-OCH₂-CHR-OH, C₆H₅-(OCH₂-CHR)₂-OH oder ein Gemisch daraus eingesetzt wird.

5. Verfahren nach einem oder mehreren der Ansprüche 1 bis 4, worin vor der Zugabe des Alkylenoxids das Gemisch aus Initiatoralkohol und basischem Katalysator auf Wassergehalte von kleiner 500 ppm destillativ getrocknet wird.

6. Verfahren nach einem oder mehreren der Ansprüche 1 bis 5, worin die zur Trocknung verwendeten Temperatur- und Druckbedingungen so gewählt werden, dass der verwendete Initiatoralkohol noch nicht siedet, Wasser jedoch abdestilliert ohne ein Azeotrop mit dem Initiatoralkohol zu bilden.

7. Verfahren nach einem oder mehreren der Ansprüche 1 bis 6, worin das zugegebene Alkylenoxid einen Wassergehalt von kleiner als 50 ppm aufweist.

8. Verfahren nach einem oder mehreren der Ansprüche 1 bis 7, worin das zugegebene Alkylenoxid Ethylenoxid ist.

9. Gemisch, enthaltend neben einem größeren Anteil einer Verbindung der Formel 1 zwischen 0,01 und 5 Gew.-% einer Verbindung der Formel 3 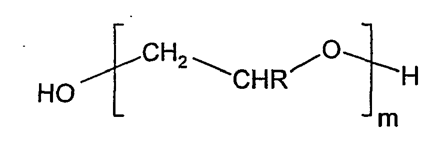 worin R die oben angegebene Bedeutung laut Anspruch 1 hat, und m für eine Zahl von 1 bis 1000 steht.

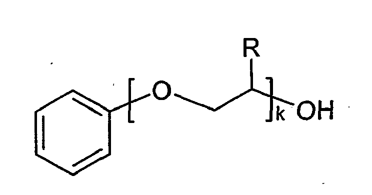

## Claims

1. A method for the production of compounds of formula 1 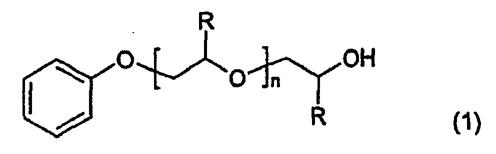 by reacting compounds of formula 2 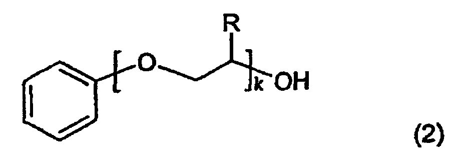 in which
k is 1, 2 or 3,
R is H, CH₃ or an alkyl radical having 2 to 4 carbon atoms, and
n is a number from 10 to 500,
by adding a basic catalyst to the compound of formula 2, removing the water from the resulting mixture and alkoxylating the mixture with an alkylene oxide of the formula

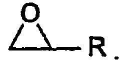

2. The method as claimed in claim 1, wherein the boiling point of the initiator alcohol C₆H₅-(OCH₂-CHR)ₖ-OH is higher than the boiling point of water, and the initiator alcohol forms no azeotrope with water.

3. The method as claimed in claim 1 and/or 2, wherein the initiator alcohol comprises less than 500 ppm of di- or polyhydroxyfunctional compounds.

4. The method as claimed in one or more of claims 1 to 3, wherein the initiator alcohol used is C₆H₅-OCH₂-CHR-OH, C₆H₅-(OCH₂-CHR)₂-OH or a mixture thereof.

5. The method as claimed in one or more of claims 1 to 4, wherein, prior to the addition of the alkylene oxide, the mixture of initiator alcohol and basic catalyst is dried by distillation to water contents of less than 500 ppm.

6. The method as claimed in one or more of claims 1 to 5, wherein the temperature and pressure conditions used for the drying are chosen so that the initiator alcohol used does not boil, but water distils off without forming an azeotrope with the initiator alcohol.

7. The method as claimed in one or more of claims 1 to 6, wherein the added alkylene oxide has a water content of less than 50 ppm.

8. The method as claimed in one or more of claims 1 to 7, wherein the added alkylene oxide is ethylene oxide.

9. A mixture comprising, besides a relatively large fraction of a compound of formula 1, between 0.01 and 5% by weight of a compound of formula 3 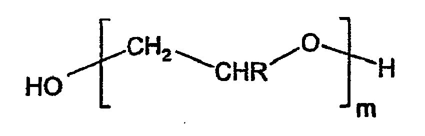 in which R has the abovementioned meaning according to claim 1, and m is a number from 1 to 1000.

## Revendications

1. Procédé de préparation de composés de formule 1 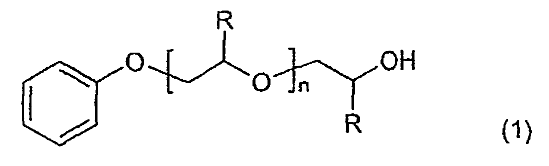 par réaction de composés de formule 2 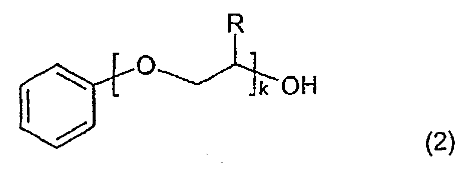 formule 2 où
k est égal à 1, 2 ou 3,
R est H, CH₃ ou un radical alkyle contenant 2 à 4 atomes de carbone, et
n est un nombre compris entre 10et 500,
dans laquelle on ajoute au composé de formule 2 un catalyseur basique, on élimine l'eau du mélange ainsi obtenu et on alcoxyle le mélange par action d'un oxyde d'alkylène de formule

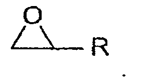

2. Procédé selon la revendication 1, dans lequel le point d'ébullition de l'alcool amorceur C₆H₅-(OCH₂-CHR)ₖ-OH est plus élevé que le point d'ébullition de l'eau et l'alcool amorceur ne forme pas de mélange azéotrope avec l'eau.

3. Procédé selon la revendication 1 et/ou 2, dans lequel l'alcool amorceur contient moins de 500 ppm de composés à fonction dihydroxylée ou polyhydroxylée.

4. Procédé selon l'une quelconque ou plusieurs des revendications 1 à 3, dans lequel en tant qu'alcool amorceur est employé C₆H₅-OCH₂-CHR-OH, C₆H₅-(OCH₂-CHR)₂-OH ou un de leurs mélanges.

5. Procédé selon l'une quelconque ou plusieurs des revendications 1 à 4, dans lequel, avant l'addition de l'oxyde d'alkylène, le mélange d'alcool amorceur et de catalyseur basique est séché par distillation jusqu'à l'obtention d'une teneur en eau inférieure à 500 ppm.

6. Procédé selon l'une quelconque ou plusieurs des revendications 1 à 5, dans lequel les conditions de température et de pression appliquées pour le séchage sont choisies de telle sorte que l'alcool amorceur utilisé ne puisse pas encore bouillir et que l'eau puisse être éliminée par distillation sans former de mélange azéotrope avec l'alcool amorceur.

7. Procédé selon l'une quelconque ou plusieurs des revendications 1 à 6, dans lequel l'oxyde d'alkylène ajouté présente une teneur en eau inférieure à 50 ppm.

8. Procédé selon l'une quelconque des revendications 1 à 7, dans lequel l'oxyde d'alkylène ajouté est l'oxyde d'éthylène.

9. Mélange contenant, outre une proportion élevée d'un composé de formule 1, de 0,01% à 5% en poids d'un composé de formule 3 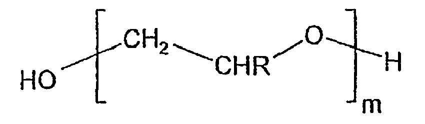 dans laquelle R a la signification indiquée ci-dessus dans la revendication 1, et m représente un nombre compris entre 1 et 1 000.
